# EUROPÄISCHE PATENTANMELDUNG

(11) **EP 3 238 952 A2**
(43) Veröffentlichungstag der Anmeldung: **01.11.2017**
(21) Anmeldenummer: 17168504.3
(22) Anmeldetag: 27.04.2017
(51) Int. Cl.: B60B 1/00, B60B 1/04, B60B 5/02, B60B 27/00, B60B 27/02

(54) **VOLLKARBONHINTERRAD MIT POLYGONAL AUSSENKONTURIERTER NABE**

(30) Priorität: 29.04.2016 DE 102016108052
(71) Anmelder: CarboFibretec GmbH, 88046 Friedrichshafen (DE)
(72) Erfinder: Menzel, Gregor, 88046 Friedrichshafen (DE); Leschik, Thomas, 88046 Friedrichshafen (DE); Wissler, Erhard, 88046 Friedrichshafen (DE); Bastian, Robert, 88046 Friedrichshafen (DE); Hübner, Michael, 88046 Friedrichshafen (DE); Köpper, Borris, 88046 Friedrichshafen (DE)
(74) Vertreter: Winter, Brandl, Fürniss, Hübner, Röss, Kaiser, Polte - Partnerschaft mbB

(57) **Zusammenfassung**

Die Erfindung betrifft eine Antriebslaufrad (1) für ein Zweirad, mit einer Felge (3), die über eine Vielzahl von Speichen (4) an einer Nabe (5) befestigt ist, wobei die Speichen (4) aus in Harz eingebetteten Verstärkungsfasern bestehen, wobei sich die Verstärkungsfasern einer Speiche (4) von einem ersten Befestigungsbereich (6) an der Felge (3) zu einem davon in Umfangsrichtung versetzten zweiten Befestigungsbereich (7) erstrecken und dabei auf der Außenseite der Nabe (5) entlanggeführt sind wobei die Nabe (5) eine im Querschnitt auf der Außenseite polygonale Form (14) besitzt, an der jede Speiche (4) mit einer axialen Seite anliegt. Die Erfindung betrifft auch ein Fahrrad mit einem solchen als Hinterrad konfigurierten Antriebslaufrad (1).

## Beschreibung

Die Erfindung betrifft ein Antriebslaufrad / Hinterrad für ein Zweirad, wie ein Fahrrad, etwa ein Rennrad, ein Zeitfahrrad, ein Triathlonrad, ein Mountainbike oder ein Trekkingrad, mit einer Felge, die vorzugsweise aus Verstärkungsfasern, die in Harz eingebettet sind, aufgebaut ist, wobei die Felge über eine Vielzahl von Speichen an einer Nabe befestigt ist, die vorzugsweise aus einem metallischen Werkstoff, wie eine Aluminium- oder Stahllegierung aufgebaut ist, wobei die Speichen aus in Harz eingebetteten Verstärkungsfasern bestehen, wobei sich die Verstärkungsfasern einer Speiche von einem ersten Befestigungsbereich einer Felge zu einem dazu in Umfangsrichtung versetzten zweiten Befestigungsbereich erstrecken und dabei auf der Außenseite der Nabe entlanggeführt sind.

Ein Vollkarbonantriebslaufrad, nämlich ein Hinterrad, zeichnet sich vor allem dadurch aus, dass die Felge aus in Harz eingebetteten Verstärkungsfasern aufgebaut ist und die Speichen nicht aus Stahl oder einer Aluminiumlegierung aufgebaut sind, sondern ebenfalls aus in Harz eingebetteten Verstärkungsfasern bestehen. Auf diese Weise kann ein extrem leichtes und steifes Laufrad für ein Fahrrad, also ein muskelgetriebenes Gefährt, zur Verfügung gestellt werden. Gerade im professionellen Bereich spielt neben Fahrkomfort auch Steifigkeit und Leichtigkeit eine große Rolle. Hier gibt es immer noch Optimierungspotenzial.

Traditionell wird auf Bremsflanken mit Bremsbelägen an der Felge gebremst. Dies ist bei Vollkarbonlaufrädern aber nachteilig, da ein Verschleiß an den Bremsflanken abrasive Wirkungen und dadurch Beschädigungen der Fasern nach sich ziehen können. Auch ist bei extremen Fahrsituationen, etwa Notbremsungen bei Hochgeschwindigkeitsbergabfahrten die entstehende Temperatur bzw. der Hitzeeintrag in die Felge so hoch, dass es zu einem Delaminieren kommen kann.

Es ist die Aufgabe der vorliegenden Erfindung, hier eine Optimierung zur Verfügung zu stellen und die bekannten Nachteile abzustellen oder wenigstens zu mildern.

Diese Aufgabe wird bei einer gattungsgemäßen Vorrichtung dadurch erreicht, dass die Nabe eine im Querschnitt auf der Außenseite polygonale Form besitzt, an der jede Speiche mit einer axialen Seite anliegt. Das Anbringen von Bremsscheiben wird dadurch derart erleichtert, so dass extrem hohe Kräfte auch eingebracht werden können, ohne dass ein Abreißen von einzelnen Bauteilstrukturen zu erwarten ist. Zahlreiche Versuche, selbst in extremsten Situationen, haben gezeigt, dass die von den Bremsbelägen an die Bremsscheibe weitergegebenen Kräfte, insbesondere die dann weiterzuleitenden Drehmomente wirkungsvoll über den Nabenkörper und die Speichen an die Felge weitergeleitet werden können, und somit einem guten Handling eines Fahrrades zuträglich sind.

Vorteilhafte Ausführungsformen sind in den Unteransprüchen beansprucht und werden nachfolgend näher erläutert.

So ist es von Vorteil, wenn jede Speiche nur an einem für sie vorgesehenen eigenen Anlagebereich direkt oder unter Zwischenlage von Zusatzharz anliegt. Die Krafteinleitung wird dadurch unerwarteterweise überdimensional verbessert.

Es ist auch zweckmäßig, wenn ein Anlagebereich einer ersten Speiche in Umfangsrichtung beabstandet von einem Anlagebereich einer zweiten Speiche ist. Gleichmäßige Kraftflüsse sind dann die Folge.

Wenn jeder Anlagebereich eine gerade / plane Anlageoberfläche besitzt, so wird ein Abknicken oder Brechen der Speiche wirkungsvoll verhindert.

Der Faserverlauf jeder einzelnen Speiche wird dann verbessert, wenn zwischen zwei Anlagebereichen eine relativ zu jeder Anlagefläche kurze Verbindungsfläche angeordnet / vorhanden ist, etwa eine solch kurze Verbindungsfläche, die vorzugsweise so lang ist, wie eine Speiche breit ist oder etwa 0,75-fach bis 1,2-fach so lang ist, wie eine Speiche breit ist. Die in Tangentialrichtung gemessene Länge der Anlagefläche kann 3- bis 5-mal so groß sein, wie die in Tangentialrichtung gemessene Länge der kurzen Verbindungsfläche.

Ein vorteilhaftes Ausführungsbeispiel ist auch dadurch gekennzeichnet, dass die Speiche zwischen zwei Kreuzungsbereichen jeweils mit einer anderen Speiche in Kontakt mit der Anlageoberfläche steht. Die sich bei Versuchen gezeigten Kräfteverläufe sind dann optimiert.

Für die Montage ist es zuträglich, wenn die Nabe mehrteilig aufgebaut ist und eine Außenverzahnungshülse besitzt, auf der eine Nabenhülse befestigt ist, die die Anlagebereiche für die Speichen stellt.

Damit das Antriebslaufrad auch im harten Rennalltag ausfallsicher genutzt werden kann, ist es von Vorteil, wenn die Nabe eine einige Speichen abschnittsweise bedekkende Abdeckhülse besitzt. Das Hinterrad kann dann besonders robust ausgestaltet werden.

Es hat sich bewährt, wenn die Speichen Verstärkungsfasern der Gruppe aus Kohlefasern, Glasfasern, Aramidfasern oder einer Mischung davon enthalten.

Weiters ist es von Vorteil, wenn eine erste Menge an Speichen nahe eines ersten stirnseitigen Endes der Nabe an dieser befestigt sind und eine zweite Menge an Speichen an einem zweiten stirnseitigen Ende der Nabe an dieser befestigt sind, wobei dazwischen die Nabe eine im Querschnitt kreisrunde Außenkontur besitzt. Die Montage wird dadurch vereinfacht, da ein Justieren der Speichen der ersten Menge relativ zu Speichen der zweiten Menge durch Drehung einfach möglich wird.

Es ist auch von Vorteil, wenn alle Speichen der ersten Menge und/oder alle Speichen der zweiten Menge, an einer polygonalen Form oder jeweils einer von zwei polygonalen Formen anliegen.

Es hat sich bewährt, wenn an der Nabe eine Bremsscheibe, etwa nach Art eines geschlossenen Ringes befestigt ist. Dadurch können grundsätzlich höhere Kräfte übertragen werden, insbesondere bei regennassen Bedingungen.

Wenn die Bremsscheibe formschlüssig, etwa über eine in die Außenverzahnungshülse eingreifende Verzahnung eingreift, so können besonders große Kräfte übertragen werden.

Es ist von Vorteil, wenn die Speiche mit der polygonalen Form in Formschluss und/oder Kraftschluss steht.

Ein guter Kompromiss zwischen Leichtigkeit und Steifigkeit ist dann erreicht, wenn pro achsialer Seite fünf Speichen vorhanden sind. Diese fünf Speichen erstrecken sich dann am Zentrum des Laufrades vorbei von der einen Seite der Felge auf die andere, vorzugsweise auf die jeweils diametral gegenüberliegende Seite.

Dabei ist es von Vorteil, wenn der Abstand von einem Befestigungsbereich zum nächsten Befestigungsbereich ca. 18° beträgt und die polygonale Form bei Nichtberücksichtigung der kurzen Verbindungsflächen eine pentagonale Form besitzt oder die eines regelmäßigen Fünfecks.

Die Erfindung betrifft letztlich auch ein Fahrrad mit einem als Hinterrad konfigurierten Antriebslaufrad der erfindungsgemäßen Art.

Die Erfindung wird nachfolgend mit Hilfe einer Zeichnung näher erläutert. Dabei werden unterschiedliche Ausführungsbeispiele dargestellt. Es zeigen:
- Fig. 1: einen zentrumsnahen Abschnitt eines erfindungsgemäßen Antriebslaufrades mit noch nicht montierter Bremsscheibe und noch nicht montierter Abdeckhülse,
- Fig. 2: das Ausführungsbeispiel der Fig. 1 in ebenfalls perspektivischer Darstellung, jedoch mit bereits montierter Abdeckhülse,
- Fig. 3: eine Ansicht von vorne, d.h. in Längsrichtung auf das Ausführungsbeispiel mit noch nicht montierter Abdeckhülse aus Fig. 1,
- Fig. 4: einen leicht perspektivisch dargestellten Längsschnitt durch die Ausführungsform der Fig. 2, also mit montierter Abdeckhülse,
- Fig. 5: eine Vergrößerung des Bereiches V aus Fig. 3, wobei jedoch nur die Speichen an einer ersten Stirnfläche und die dazugehörigen Teile der Nabe dargestellt sind,
- Fig. 6: eine weitere Ausführungsform einer in einem erfindungsgemäßen Antriebslaufrad verwendbaren Nabenhülse,
- Fig. 7: eine zweite Ausführungsform einer anderen Nabenhülse,
- Fig. 8: eine weitere Ausführungsform einer verwendbaren Nabenhülse,
- Fig. 9: die jene Fign. 6 bis 8 perspektivisch dargestellte Nabenhülse einer erfindungsgemäßen Art, wie sie jedoch in den Ausführungsbeispielen der Fign. 1 bis 4 eingesetzt ist,
- Fig. 10: eine Ansicht von der bremsscheibenseitigen Stirnseite auf die Nabenhülse aus Fig. 9,
- Fig. 11: ein Längsschnitt entlang der Linie XI aus Fig. 10,
- Fig. 12: eine perspektivische Ansicht des erfindungsgemäßen Antriebslaufrades ohne montierter Bremsscheibe, und
- Fig. 13: das Antriebslaufrad aus Fig. 12 mit montierter Bremsscheibe.

Die Figuren sind lediglich schematischer Natur und dienen nur dem Verständnis der Erfindung. Die gleichen Elemente sind mit denselben Bezugszeichen versehen. Merkmale der einzelnen Ausführungsbeispiele können untereinander ausgetauscht werden.

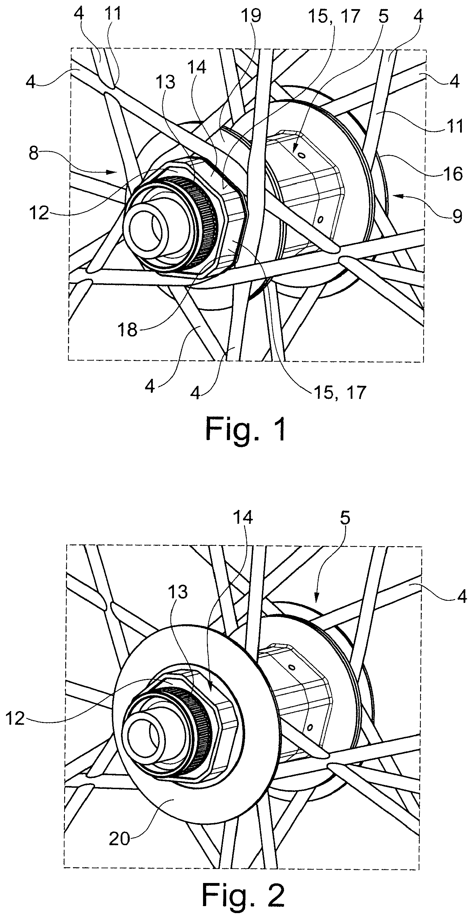

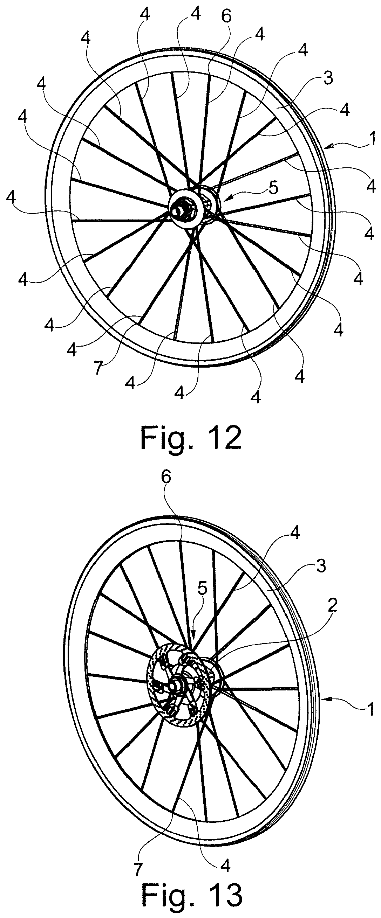

In Fig. 1 ist ein zentrumsnaher Bereich eines erfindungsgemäßen Antriebslaufrades 1, insbesondere eines Hinterrades dargestellt, wobei das vollständige Antriebslaufrad 1 in der Fig. 13 dargestellt ist, und jenes Antriebslaufrad 1 ohne eine Bremsscheibe 2, wie sie in Fig. 13 dargestellt ist, in Fig. 12 dargestellt ist. In diesen beiden Figuren 12 und 13 ist auch erkennbar, dass das Antriebslaufrad 1 eine Felge 3 besitzt, die über eine Vielzahl von Speichen 4, nämlich zwanzig Speichen 4, mit einer Nabe 5 verbunden ist. Dabei erstreckt sich eine Speiche 4 von einem ersten Befestigungsbereich 6 zu einem zweiten Befestigungsbereich 7. Der zweite Befestigungsbereich 7 ist vom Zentrum des Antriebslaufrades 1 gesehen auf der diametral gegenüberliegenden Seite vorhanden.

Enden der Verstärkungsfasern der Speiche 4 liegen somit einerseits im ersten Befestigungsbereich 6 und andererseits im zweiten Befestigungsbereich 7. Jede Speiche 4 ist vollständig aus geharzten Verstärkungsfasern, nämlich Kohlefasern und Harz aufgebaut. Als Harz bietet sich ein Duroplast oder ein Thermoplast an.

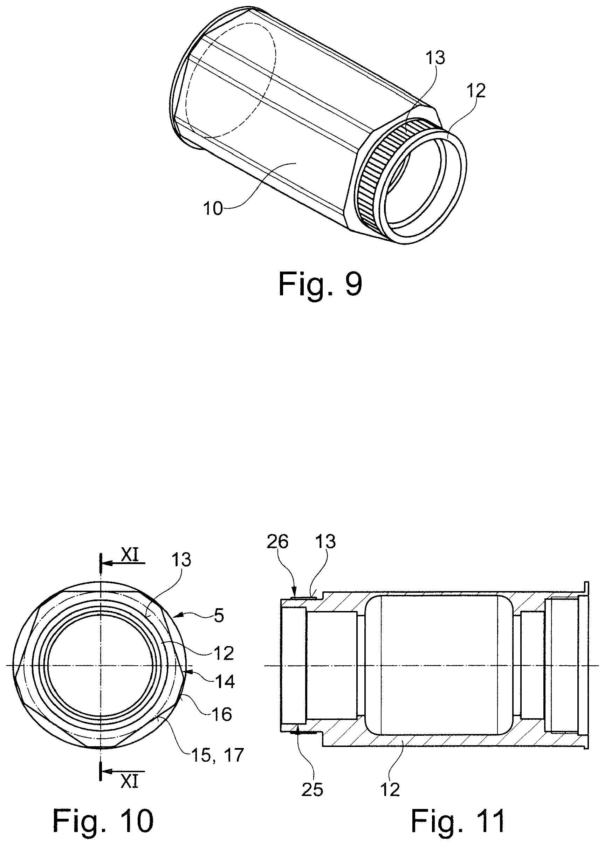

Zurückkommend auf Fig. 1 sind die Speichen 4 jeweils hälftig zu einer ersten Menge und hälftig zu einer zweiten Menge zugehörig. Die Speichen 4 der ersten Menge sind an einem ersten stirnseitigen Ende 8 der Nabe 5 festgelegt. Die andere Hälfte der Speichen 4, also die zweite Menge, ist an einem zweiten stirnseitigen Ende 9 der Nabe 5 festgelegt. Dabei ist eine Nabenhülse 10, wie sie in Fig. 9 dargestellt ist verwendet.

Jeweils zwei Speichen der beiden Mengen an Speichen 4 kreuzen sich in einem Kreuzungsbereich 11.

Die Nabe 5 besitzt innerhalb der Nabenhülse 10 eine Außenverzahnungshülse 12. Diese Außenverzahnungshülse 12 weist eine Außenverzahnung 13 auf.

Die Nabe 5 weist auf der Außenseite eine polygonale Form 14 auf. Diese polygonale Form besitzt Anlagebereiche 15, die sich in Umfangsrichtung an Verbindungsflächen 16 anschließen. An jede Verbindungsfläche 16 schließt ihrerseits wiederum ein Anlagebereich 15 mit einer Anlagefläche 17 an.

An jeder Anlagefläche 17 liegt eine Speiche 4 mit ihrer Längsseite / Längskante 18 an. Dabei liegen die Speichen 4 der ersten Menge an Speichen 4 flach an / auf einem Flansch 19. Der Flansch 19 kann ein integraler oder einteiliger oder einstückiger oder einstofflicher Bestandteil der Nabenhülse 10 sein, oder ein davon separates Bauteil. Die Speichen 4 der ersten Menge an Speichen 4 sind an der Nabenhülse 10 und/oder dem Flansch 9 anlaminiert / angeklebt. Ein Formschluss zwischen der Nabenhülse 10 und/oder dem Flansch 19 sowie den Speichen 4 wird geschaffen. Es kann auch alternativ oder zusätzlich ein Kraftschluss erzeugt werden.

Ein dazu vergleichbarer Zustand ist in Fig. 2 dargestellt, wobei jedoch eine Abdeckhülse 20 eingesetzt ist.

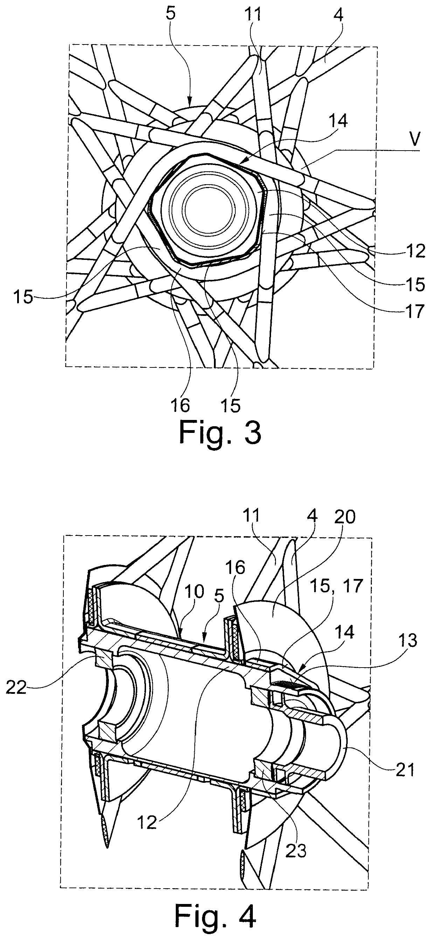

Dass die Speichen 4 in direktem Kontakt mit der polygonalen Form 14, insbesondere den Anlageflächen / Anlageoberflächen 17 stehen, ist auch gut der Fig. 3 zu entnehmen.

In Fig. 4 ist das komplette Hindurcherstrecken der Außenverzahnungshülse 12 durch die Nabenhülse 10 zum Ausbilden der Nabe 5 dargestellt. Eine Innenhülse 21 ist benachbart zu einem Lager 22 und distal zu einem anderen Lager 23 angeordnet. Die beiden Lager 22 und 23 können als Wälzlager oder Gleitlager ausgebildet sein. Das Verwenden von Wälzlagern ist bevorzugt.

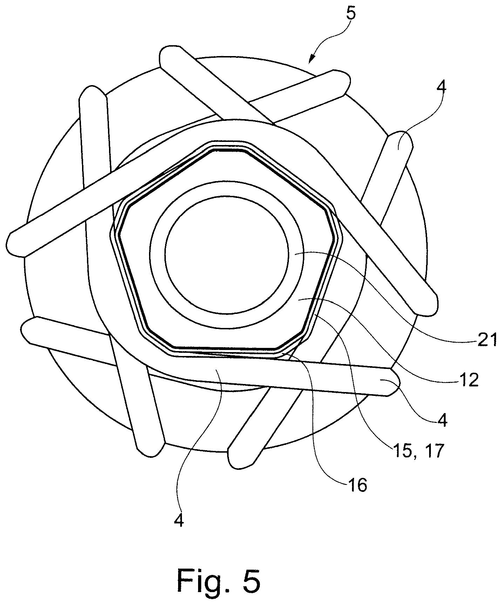

Die Speichen 4 sind möglichst abstandslos, wie in Fig. 5 dargestellt, an der jeweiligen Anlagefläche / Anlageoberfläche 17 anliegend.

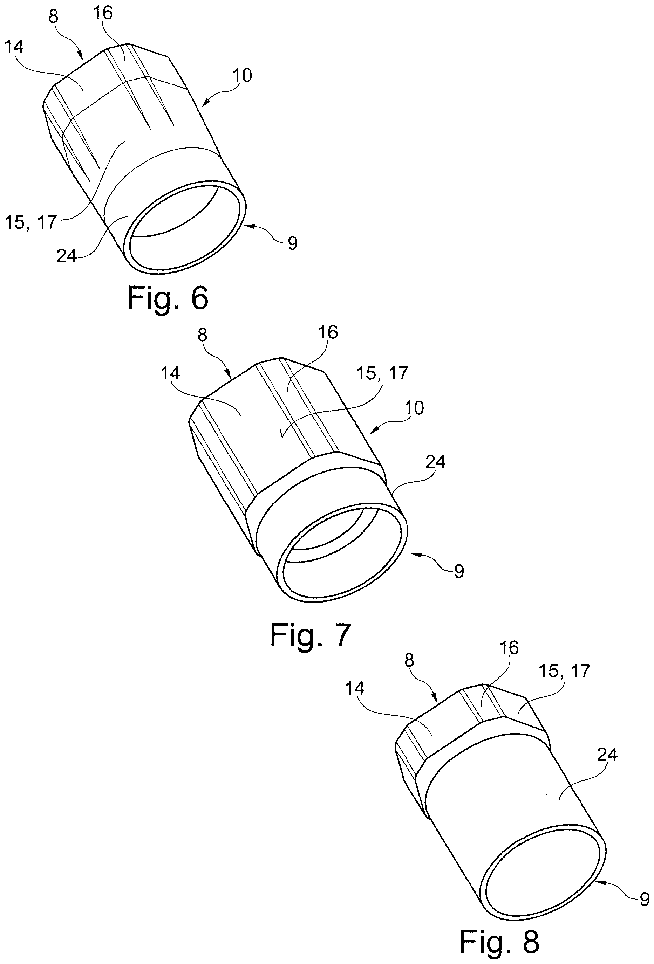

Dass die polygonale Form 14 einer Nabenhülse 10 nicht zwingend von einem stirnseitigen Ende bis zum anderen ragen muss, ist den Fign. 6 bis 8 zu entnehmen. Dabei ist am zweiten stirnseitigen Ende 9 der Nabe 5 bzw. der Nabenhülse 10 ein kreisrunder Außenbereich 24 aufgeprägt bzw. dort vorhanden.

Eine dazu abgewandelte Ausführungsform ist den Fign. 9 bis 11 zu entnehmen. Dabei besitzt die Außenverzahnungshülse 12 auch einen Centerlock-Innengewindebereich 25. Es gibt auch einen Centerlock-Aufnahmebereich 26.

### Bezugszeichenliste

- 1: Antriebslaufrad / Hinterrad
- 2: Bremsscheibe
- 3: Felge
- 4: Speiche
- 5: Nabe
- 6: erster Befestigungsbereich
- 7: zweiter Befestigungsbereich
- 8: erstes stirnseitiges Ende der Nabe
- 9: zweites stirnseitiges Ende der Nabe
- 10: Nabenhülse
- 11: Kreuzungsbereich
- 12: Außenverzahnungshülse
- 13: Außenverzahnung
- 14: polygonale Form
- 15: Anlagebereich
- 16: Verbindungsfläche
- 17: Anlagefläche / Anlageoberfläche
- 18: Längsseite / Längskante einer Speiche
- 19: Flansch
- 20: Abdeckhülse
- 21: Innenhülse
- 22: Lager
- 23: Lager
- 24: kreisrunder Außenbereich
- 25: Centerlock-Innengewindebereich
- 26: Centerlock-Aufnahmebereich

## Patentansprüche

1. Antriebslaufrad (1) für ein Zweirad, mit einer Felge (3), die über eine Vielzahl von Speichen (4) an einer Nabe (5) befestigt ist, wobei die Speichen (4) aus in Harz eingebetteten Verstärkungsfasern bestehen, wobei sich die Verstärkungsfasern einer Speiche (4) von einem ersten Befestigungsbereich (6) an der Felge (3) zu einem davon in Umfangsrichtung versetzten zweiten Befestigungsbereich (7) erstrecken und dabei auf der Außenseite der Nabe (5) entlanggeführt sind **dadurch gekennzeichnet, dass** die Nabe (5) eine im Querschnitt auf der Außenseite polygonale Form (14) besitzt, an der jede Speiche (4) mit einer axialen Seite anliegt.

2. Antriebslaufrad (1) nach Anspruch 1, **dadurch gekennzeichnet, dass** jede Speiche (4) nur an einem für sie vorgesehenen eigenen Anlagebereich (15) direkt oder unter Zwischenlage von Zusatzharz anliegt.

3. Antriebslaufrad (1) nach Anspruch 1 oder 2, **dadurch gekennzeichnet, dass** ein Anlagebereich (15) einer ersten Speiche (4) in Umfangsrichtung beabstandet von einem Anlagebereich (15) einer zweiten Speiche (4) ist.

4. Antriebslaufrad (1) nach Anspruch 2 oder 3, **dadurch gekennzeichnet, dass** jeder Anlagebereich (15) eine gerade / plane Anlageoberfläche (17) besitzt.

5. Antriebslaufrad (1) nach einem der Ansprüche 2 bis 4, **dadurch gekennzeichnet, dass** zwischen zwei Anlagebereichen (15) eine relativ zu jeder Anlageoberfläche (17) kurze Verbindungsfläche (16) angeordnet ist.

6. Antriebslaufrad (1) nach Anspruch 4 oder 5, **dadurch gekennzeichnet, dass** die Speiche (4) zwischen zwei Kreuzungsbereichen (11) jeweils mit einer anderen Speiche (4) in Kontakt mit der Anlageoberfläche (17) steht.

7. Antriebslaufrad (1) nach einem der Ansprüche 2 bis 6, **dadurch gekennzeichnet, dass** die Nabe (5) mehrteilig aufgebaut ist und eine Außenverzahnungshülse (12) besitzt, auf der eine Nabenhülse (10) befestigt ist, die die Anlagebereiche (15) für die Speichen (4) stellt.

8. Antriebslaufrad (1) nach Anspruch 7, **dadurch gekennzeichnet, dass** die Nabe (5) eine die Speichen (4) abschnittsweise bedeckende Abdeckhülse (20) besitzt.

9. Antriebslaufrad (1) nach einem der Ansprüche 1 bis 8, **dadurch gekennzeichnet, dass** die Speichen (4) Verstärkungsfasern der Gruppe aus Kohlefasern, Glasfasern, Aramidfasern oder eine Mischung davon enthalten.

10. Fahrrad mit einem als Hinterrad konfiguriertem Antriebslaufrad (1) nach einem der vorhergehenden Ansprüche.
